# EUROPEAN PATENT APPLICATION

(11) **EP 2 579 262 A1**
(43) Date of publication of application: **10.04.2013**
(21) Application number: 11786431.4
(22) Date of filing: 14.04.2011
(51) Int. Cl.: G21C 17/003, F22B 37/02, G21C 19/02

(54) **WORKING DEVICE FOR INSIDE OF WATER CHAMBER, AND INSTALLATION METHOD FOR WORKING DEVICE FOR INSIDE OF WATER CHAMBER**

(30) Priority: 28.05.2010 JP 2010123540
(71) Applicant: Mitsubishi Heavy Industries, Ltd., Tokyo 108-8215 (JP)
(72) Inventor: HOSOE, Fumihiro, Tokyo 108-8215 (JP)
(74) Representative: Intès, Didier Gérard André
(86) International application number: PCT/JP2011/059276
(87) International publication number: WO 2011/148731

(57) **Abstract**

A water-chamber working apparatus (1) that performs a predetermined work inside a water chamber (131) of a steam generator includes at least two locking units (2) inserted into and locked to heat transfer tubes (132) provided on a tube plate (137) in the water chamber (131), a support means (3) spanned between the respective locking units (2), and a movable body (4) movably provided along the spanned support means (3). Accordingly, the movable body (4) can be stably supported in the water chamber (131) and can be easily moved.

## Description

### Field

The present invention relates to a water-chamber working apparatus that performs a work in a water chamber of a steam generator, and an installation method of the water-chamber working apparatus.

### Background

It is desired to reduce the quantity of work performed by a worker in a water chamber of a steam generator provided in a nuclear power plant. Therefore, conventionally, there is a technique in which a water-chamber working apparatus is introduced in a water chamber and the water-chamber working apparatus is remote-controlled to perform the work in the water chamber.

For example, Patent Literature 1 discloses a water-chamber working apparatus (a remote testing apparatus) that conducts flaw testing of a plurality of heat transfer tubes in a steam generator. In this water-chamber working apparatus, a clamp shaft is inserted into a plurality of heat transfer tubes provided in the steam generator to support a walking guide robot (hereinafter, "moveable body") with respect to a tube plate of the steam generator so that the walking guide robot is suspended therefrom. The movable body moves along the tube plate by switching the clamp shaft with respect to the heat transfer tubes.

### Citation List

### Patent Literature

Patent Literature 1: Japanese Patent Application Laid-open No. 10-227765

### Summary

### Technical Problem

However, in a water-chamber working apparatus in which a movable body is suspended from a tube plate as in the water-chamber working apparatus described in Patent Literature 1, design is devised sufficiently so that the movable body does not fall from the tube plate, and the movable body is remote-controlled carefully so as not to fall from the tube plate. As a result, the design of the movable body may become complicated in order to move the movable body stably along the tube plate, and working hours may increase to remote-control the movable body carefully.

The present invention has been achieved to solve the above problems, and an object of the present invention is to provide a water-chamber working apparatus that can support a movable body stably in a water chamber and can move the movable body easily, and an installation method of the water-chamber working apparatus.

### Solution to Problem

According to an aspect of the present invention, a water-chamber working apparatus that performs a predetermined work inside a water chamber of a steam generator, includes: at least two locking units inserted into and locked to heat transfer tubes provided on a tube plate in the water chamber; a support unit spanned between the respective locking units; and a movable body moveably provided along the spanned support unit.

According to the water-chamber working apparatus, the movable body moves along the support unit spanned between the respective locking units. Accordingly, the movable body can be stably supported in the water chamber and can be easily moved.

Advantageously, the water-chamber working apparatus further includes a length adjustment unit that can change a length of the support unit between the respective locking units.

According to the water-chamber working apparatus, by adjusting the length of the support unit, the support unit can be spanned between the respective locking units and stretched in a tensioned state regardless of a position where each locking unit is fixed to the tube plate.

Advantageously, in the water-chamber working apparatus, the locking unit includes a clamping mechanism that is opened or closed in a radially outward direction, while being inserted into the heat transfer tube.

According to the water-chamber working apparatus, the locking unit can be easily locked to the heat transfer tube and released easily by the clamping mechanism.

Advantageously, in the water-chamber working apparatus, the support unit is a wire.

According to the water-chamber working apparatus, because the wire has flexibility, handling is easy by winding or the like. Accordingly, the water-chamber working apparatus can be easily handled.

Advantageously, the water-chamber working apparatus further includes a guide unit that guides a work tube extending from a working device provided in the movable body along with a movement of the movable body.

According to the water-chamber working apparatus, the work tube is not loosened excessively or thightened more than necessary along with the movement of the movable body, and the work tube can be guided while reducing friction resistance associated with the work tube.

Advantageously, the water-chamber working apparatus further includes a movable-body position detection unit that detects a shortest approach position between the movable body and the locking unit.

According to the water-chamber working apparatus, such a state that the movable body collides with the locking unit can be prevented, thereby enabling to execute remote control of the movable body easily.

Advantageously, in the water-chamber working apparatus, the movable body includes a flaw testing unit that probes, as a predetermined work, a flaw formed on the heat transfer tubes with respect to the heat transfer tubes provided in the steam generator.

According to the water-chamber working apparatus, the heat transfer tube is opened to a surface facing downward of the tube plate, and a probe needs to be inserted from the downside in order to probe a flaw in the heat transfer tube. Furthermore, in the water chamber, an inner wall surface thereof is formed in a quarter spherical shape, and fixation of the device is difficult. In this point, because the water-chamber working apparatus includes at least two of the locking units inserted into and locked to the heat transfer tubes provided on the tube plate in the water chamber, the support unit spanned between the respective locking units, and the movable body movably provided along the spanned support unit, the water-chamber working apparatus is suitable for flaw probing of the heat transfer tube. As a result, at the time of performing flaw probing of the heat transfer tube, significant effects such that the movable body is stably supported in the water chamber and easily moved can be acquired.

According to another aspect of the present invention, an installation method of a water-chamber working apparatus for installing a water-chamber working apparatus that performs a predetermined work inside a water chamber of a steam generator, includes: a step of inserting at least two locking units into heat transfer tubes provided on a tube plate in the water chamber and locking the locking units thereto, and spanning a support unit between the respective locking units; and a step of attaching the movable body to the spanned support unit.

According to the installation method of a water-chamber working apparatus, the movable body moves along the support unit spanned between the respective locking units. Therefore, the movable body can be stably supported in the water chamber and can be easily moved. That is, according to the installation method of a water-chamber working apparatus, all the configurations for moving and working do not need to be provided in the movable body, and the weight is distributed, thereby enabling to perform installation easily, as compared to a conventional water-chamber working apparatus in which a movable body is suspended from a tube plate.

Advantageously, the installation method of a water-chamber working apparatus further includes a step of adjusting in advance a length of the support unit before the locking unit is inserted into and locked to the heat transfer tubes.

According to the installation method of a water-chamber working apparatus, by adjusting the length of the support unit outside of the water chamber before fixing the locking unit in the water chamber, a time during which a worker is exposed to radiation can be reduced, thereby enabling to provide a safe work.

Advantageously, the installation method of a water-chamber working apparatus further includes a step of adjusting a length of the support unit after the locking unit is inserted into and locked to the heat transfer tubes.

According to the installation method of a water-chamber working apparatus, when the locking unit is attached to the tube plate, the support unit is loosened, and after having attached the locking unit to the tube plate, the support unit between the respective locking units can be stretched in a tensioned state. Accordingly, an attachment work of the locking unit can be easily performed and the support unit can be stretched in a tensioned state appropriately.

Advantageously, in the installation method of a water-chamber working apparatus, the support units are spanned parallel to each other in a horizontal direction, and after the movable body is inserted between the respective support units, the movable body is horizontally rotated by 90 degrees to span the movable body between the respective support units.

By spanning the movable body over the support units parallel to each other in the horizontal direction, the movable body can be moved stably. According to the installation method of a water-chamber working apparatus, the work for spanning the movable body over the support units parallel to each other in the horizontal direction can be performed easily.

Advantageously, in the installation method of a water-chamber working apparatus, a plurality of support units are spanned and the movable body is selectively attached to one of the support units.

According to the installation method of a water-chamber working apparatus, after testing of all the heat transfer tubes positioned in a moving range of the movable body along the support units has finished, testing of all the heat transfer tubes can be continuously conducted by spanning the movable body over to other support units, without changing the position of the locking unit.

Advantageously, in the installation method of a water-chamber working apparatus, an imaging unit is arranged in advance in the water chamber, and the locking unit, the support unit, and the movable body are installed, while capturing images inside the water chamber by the imaging unit.

According to the installation method of a water-chamber working apparatus, because an installed condition of the locking unit, the support unit, and the movable body can be confirmed from outside of the water chamber, the time during which the worker is exposed to radiation can be reduced, thereby enabling to provide a safe work. Advantageous Effects of Invention

According to the present invention, a movable body can be stably supported in a water chamber and can be easily moved.

### Brief Description of Drawings

FIG. 1 is a configuration diagram of a general nuclear power plant.
FIG. 2 is a configuration diagram of a water chamber of a steam generator in the nuclear power plant shown in FIG. 1.
FIG. 3 is an A-A sectional view of FIG. 2.
FIG. 4 is a perspective view of a water-chamber working apparatus according to an embodiment of the present invention.
FIG. 5 is a side view of the water-chamber working apparatus according to the embodiment of the present invention.
FIG. 6 is a plan view of the water-chamber working apparatus according to the embodiment of the present invention.
FIG. 7 is a process diagram of an installation method of the water-chamber working apparatus according to the embodiment of the present invention.
FIG. 8 is a process diagram of the installation method of the water-chamber working apparatus according to the embodiment of the present invention.
FIG. 9 is a process diagram of the installation method of the water-chamber working apparatus according to the embodiment of the present invention.
FIG. 10 is a process diagram of the installation method of the water-chamber working apparatus according to the embodiment of the present invention.
FIG. 11 is a process diagram of the installation method of the water-chamber working apparatus according to the embodiment of the present invention.
FIG. 12 is a process diagram of the installation method of the water-chamber working apparatus according to the embodiment of the present invention.
FIG. 13 is a process diagram of the installation method of the water-chamber working apparatus according to the embodiment of the present invention.
FIG. 14 is a process diagram of the installation method of the water-chamber working apparatus according to the embodiment of the present invention.

### Description of Embodiments

Exemplary embodiments of the present invention will be explained bellow in detail with reference to the accompanying drawings. The present invention is not limited to the embodiments. In addition, constituent elements in the hollowing embodiments include those that can be easily replaced by persons skilled in the art or that are substantially equivalent.

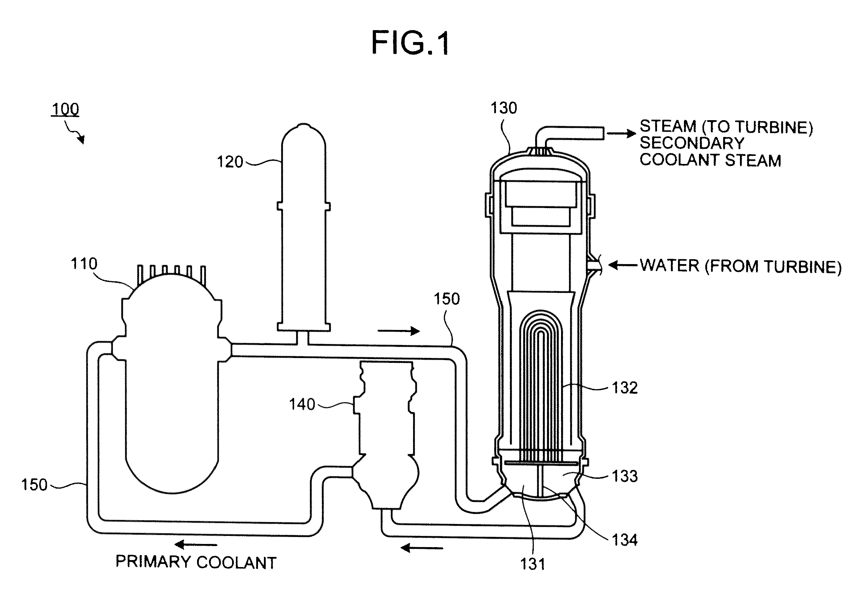

An embodiment of the present invention is explained with reference to the drawings. FIG. 1 depicts a general nuclear power plant. For example, a nuclear powder plant 100 includes a pressurized water reactor (PWR). In the nuclear power plant 100, a reactor vessel 110, a pressurizer 120, a steam generator 130, and a pump 140 as a structure are sequentially coupled by a primary coolant pipe 150, to form a circulation path of a primary coolant. A circulation path of a secondary coolant is also formed between the steam generator 130 and a turbine (not shown).

In the nuclear power plant 100, the primary coolant is heated in the reactor vessel 110 to become a high-temperature and high-pressure primary coolant, which is supplied to the steam generator 130 via the primary coolant pipe 150 while being pressurized by the pressurizer 120 to maintain the pressure constant. In the steam generator 130, the primary coolant flows into an inlet-side water chamber 131, and is supplied from the inlet-side water chamber 131 to a plurality of U-shaped heat transfer tubes 132. Heat exchange is performed between the primary coolant and the secondary coolant in the heat transfer tubes 132, and the secondary coolant is evaporated to generate steam. The secondary coolant, which becomes steam by heat exchange, is supplied to the turbine. The turbine is driven by evaporation of the secondary coolant. Power of the turbine is transmitted to a power generator (not shown) to generate power. Steam supplied for driving the turbine is condensed to become water, and is supplied to the steam generator 130. Meanwhile, the primary coolant after heat exchange is recovered to a side of the pump 140 via the primary coolant pipe 150.

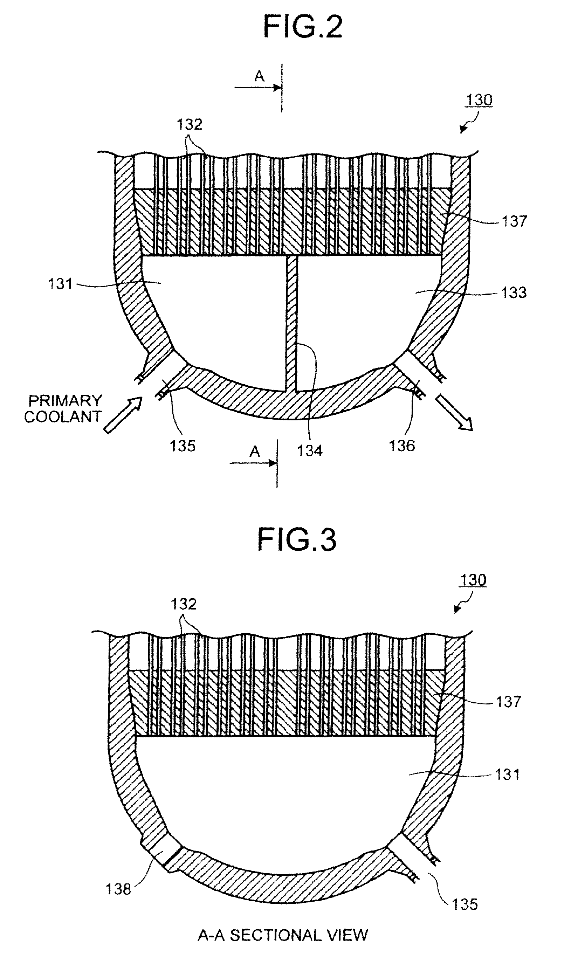

As shown in FIGS. 2 and 3, in the steam generator 130, an inlet nozzle 135 is provided in the inlet-side water chamber 131. The primary coolant pipe 150 on the inlet side is welded and connected to the inlet nozzle 135. An outlet nozzle 136 is also provided in an outlet-side water chamber 133 in the steam generator 130. The primary coolant pipe 150 on the outlet side is welded and connected to the outlet nozzle 136. A tube plate 137 is installed on the ceiling of the inlet-side water chamber 131 and the outlet-side water chamber 133. The inlet-side water chamber 131 and the outlet-side water chamber 133 are divided by a partition plate 134. The tube plate 137 supports lower ends of the heat transfer tubes 132, and divides an upper part of the steam generator 130 and the water chambers 131 and 133. A maintenance hatch 138 from which a worker enters and exits the water chambers 131 and 133 is provided in the inlet-side water chamber 131 and the outlet-side water chamber 133. The inlet-side water chamber 131 and the outlet-side water chamber 133 are respectively formed in a quarter spherical shape.

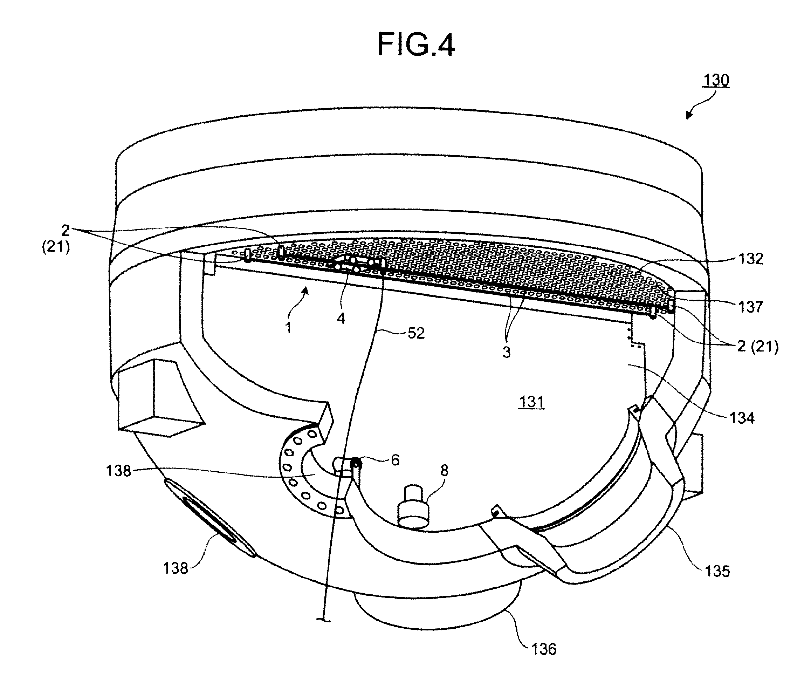

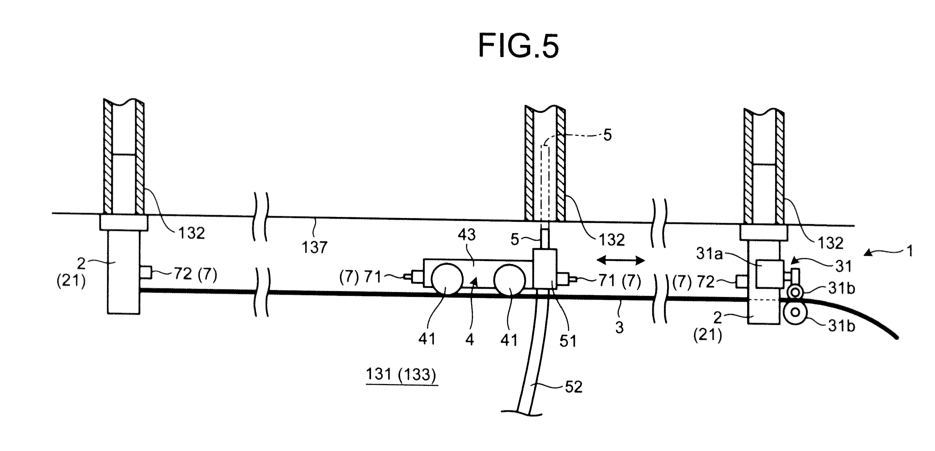

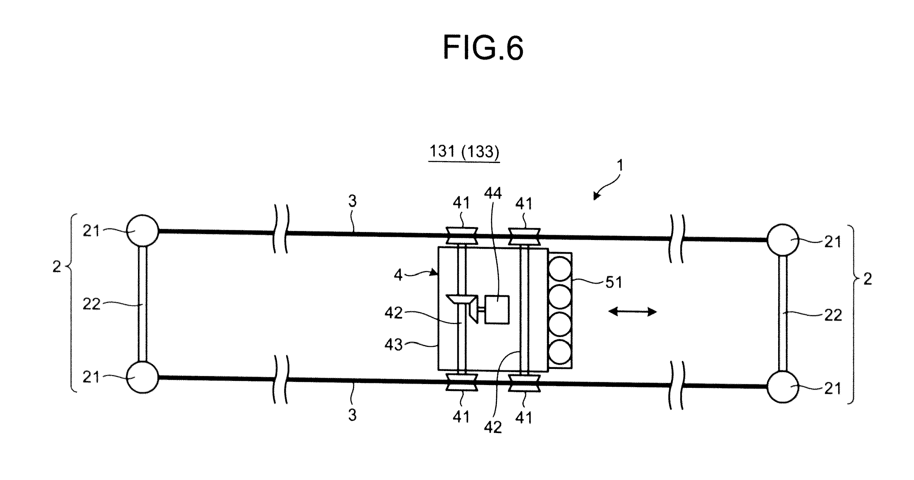

A water-chamber working apparatus 1 according to the present embodiment is explained below. FIG. 4 is a perspective view of the water-chamber working apparatus according to the present embodiment. FIG. 5 is a side view of the water-chamber working apparatus according to the present embodiment. FIG. 6 is a plan view of the water-chamber working apparatus according to the present embodiment.

As shown in FIGS. 4 to 6, in the water-chamber working apparatus 1, a predetermined work is performed in the water chambers 131 and 133 (the inlet-side water chamber 131 is shown in FIG. 4, and reference sign 131 of the inlet-side water chamber 131 is used in the following explanations, including the outlet-side water chamber 133 as a water chamber) of the steam generator 130. In the present embodiment, the predetermined work is assumed to be eddy current testing (ECT), which is a work for probing a flaw in the heat transfer tube 132. The water-chamber working apparatus 1 includes a locking means 2, a support means 3, and a movable body 4.

The locking means 2 is inserted into and locked to the heat transfer tubes 132 provided on the tube plate 137 in the water chamber 131, and at least two locking means 2 are required. The locking means 2 is formed as a rod-shaped body inserted into the heat transfer tubes 132 and includes a clamping mechanism 21 for maintaining an inserted state into the heat transfer tubes 132. Although not shown in the drawings, in the clamping mechanism 21, a claw member is arranged around a rod inserted into the heat transfer tube 132, and the claw member is opened in a radial direction of the rod to abut on an inner surface of the heat transfer tube 132 by an actuator (such as a hydraulic pressure, an air pressure, an oil pressure, and a servo motor), so that the rod cannot be pulled out from the heat transfer tube 132 to fix the locking means 2 to the tube plate 137. Meanwhile, the claw member of the clamping mechanism 21 is closed by the actuator and isolated from the inner surface of the heat transfer tube 132, and the rod can be pulled out from the heat transfer tube 132, thereby enabling to separate the locking means 2 from the tube plate 137. The clamping mechanism 21 is not limited to the configuration of being actuated by the actuator, and for example, the configuration can be such that the claw member is approached or isolated with respect to the inner surface of the heat transfer tube 132 by being rotated by an attachment jig 10 described later. In the present embodiment, a plurality of (two) clamping mechanisms 21 are provided with respect to one locking means 2, and coupled by a coupling member 22 (see FIG. 6). The locking means 2 can be fixed to the tube plate 137 more reliably by providing the plurality of clamping mechanisms 21.

The support means 3 is spanned between the two locking means 2 to support the movable body 4. For example, the support means 3 is constituted as a wire having flexibility, and provided so that the length thereof between the respective locking means 2 can be adjusted by a length adjustment means 31. As shown in FIG. 5, for example, the length adjustment means 31 rotates a roller 31b by a motor 31a to feed the support means 3, thereby changing the length between the respective locking means 2. The length adjustment means 31 can have such a configuration that the motor 31a is not provided, and the roller 31b is rotated by a rotation operation by the attachment jig 10 described later. The support means 3 is not limited to the wire and can be a rod-like member, for example.

It is desired that at least two support means 3 be provided and arranged parallel to each other in a horizontal direction between the respective locking means 2. In the present embodiment, as shown in FIG. 6, in the respective locking means 2, the two clamping mechanisms 21 are arranged with a same gap, and ends of the support means 3 are attached to the clamping mechanisms 21 of the respective locking means 2, spanned between the clamping mechanisms 21 of the respective locking means 2, and arranged parallel to each other in the horizontal direction.

The movable body 4 moves along the support means 3 spanned between the respective locking means 2. The movable body 4 includes wheels 41 mounted on the support means 3, a vehicle body 43 rotatably supporting rotation shafts 42 of the wheels 41, and a drive motor 44 that rotates the rotation shafts 42. The wheels 41 are provided respectively at opposite ends of the rotation shaft 42. At least two axle units are provided, in which the wheels 41 are provided at opposite ends of the rotation shaft 42 (a mode in which two axle units are provided is shown in FIGS. 4 to 6). The drive motor 44 is provided to rotate the rotation shaft 42 with respect to at least one axle unit. The respective wheels 41 of the axle unit are respectively mounted on the two support means 3 provided so as to be arranged parallel to each other in the horizontal direction between the respective locking means 2. In such a movable body 4, the vehicle body 43 moves along the support means 3 by rotating the wheels 41 via the rotation shaft 42 by the drive of the drive motor 44. When more than two support means 3 are provided, the movable body 4 can include the wheels 41 corresponding to the number of the support means 3. Although not shown in the drawings, the movable body 4 can include a support wheel so that the support means 3 is put between the wheel 41 and the support wheel. The support wheel is preferably provided when the support means 3 is only one, and can guide the movement of the vehicle body 43 along the support means 3. When the support means 3 is only one, it is desired to provide a balancer as a balance weight in order to place the vehicle body 43 stably on the support means 3. The configuration of the movable body 4 is not limited to a configuration in which the movable body 4 moves by the drive of the drive motor 44, and for example, the movable body 4 can have such a configuration that the movable body 4 moves along the support means 3 by being towed by a cable or the like from outside of the water chamber 131.

A working device 5 for performing a predetermined work is provided in the movable body 4. In the present embodiment, it is assumed that the working device 5 is a probe (a flaw testing means) 5 that conducts the eddy current testing. The probe 5 is inserted into the heat transfer tube 132, and is supported by a probe support body 51 attached to the vehicle body 43. In the present embodiment, the probe 5 is provided in plural (for example, four) so that the probes 5 are inserted respectively into a plurality of (for example, four) heat transfer tubes 132 to conduct testing of the respective heat transfer tubes 132 collectively. The probe 5 is inserted into a work tube 52, and slid in the work tube 52 so as to be inserted into and removed from the heat transfer tube 132. As shown in FIG. 4, the work tube 52 is pulled out from the maintenance hatch 138 to the outside of the water chamber 131.

It is desired that the probe 5 can be inserted between the respective clamping mechanisms 21 of one locking means 2. With this configuration, testing of the heat transfer tube 132 between the respective clamping mechanisms 21 can be conducted. The probe 5 is provided at an end of the movable body 4 in a moving direction. However, the probe 5 can be provided on the side of the movable body 4 in the moving direction, for example. That is, an attachment position of the probe 5 to the movable body 4 is not limited, and the probe 5 can be attached to a position suitable for the testing corresponding to the configuration of the locking means 2.

The working device for performing a predetermined work can be a testing device that detects a crack in a weld zone in the water chamber 131, such as a circumference of the tube plate 137, a cutting device for maintenance and repair of the weld zone, or a welding device that performs welding after cutting, other than the probe 5.

As shown in FIG. 4, the water-chamber corking apparatus 1 is provided with a guide means 6 at an edge of the maintenance hatch 138, which guides the work tube 52 extending from the probe 5 provided in the movable body 4, along with a movement of the movable body 4. The guide means 6 is constituted as a pulley attached to the edge of the maintenance hatch 138, and guides the work tube 52 while reducing friction resistance associated with the work tube 52, without generating unnecessary looseness in the work tube 52 pushed and pulled with respect to the water chamber 131 from the maintenance hatch 138 or stretching the work tube 52 more than necessary, along with the movement of the movable body 4.

Furthermore, as shown in FIG. 5, the water-chamber working apparatus 1 is provided with a movable-body-position detection means 7 including a switch 71 provided at a front end and a rear end of the moving direction of the movable body 4, and an actuation unit 72 provided in the locking means 2 to actuate the switch 71. The movable-body-position detection means 7 detects a shortest approach position between the movable body 4 and the locking means 2, that is, a position at which the movable body 4 approaches closest to the locking means 2 without any collision. For example, the movable-body-position detection means 7 includes a limit switch, a switch actuating protrusion, a light projection and reception sensor, and a douser as the switch 71 and the actuation unit 72. In the movable-body-position detection means 7, the actuation unit 72 can be provided at the front end and the rear end in the moving direction, and the switch 71 can be provided in the locking means 2.

As described above, the water-chamber working apparatus 1 according to the present embodiment is a water-chamber working apparatus that performs a predetermined work inside the water chamber 131 of the steam generator 130, and includes at least two locking means 2 inserted into and locked to the heat transfer tubes 132 provided on the tube plate 137 in the water chamber 131, the support means 3 spanned between the respective locking means 2, and the movable body 4 movably provided along the spanned support means 3.

According to the water-chamber working apparatus 1, the movable body 4 moves along the support means 3 spanned between the respective locking means 2. Accordingly, the movable body 4 can be stably supported in the water chamber 131 and moved easily. That is, the water-chamber working apparatus 1 according to the present embodiment can simplify the design for stably supporting the movable body 4 in the water chamber 131 and reduce working hours for remote control of the movable body 4, as compared to a conventional water-chamber working apparatus in which a movable body is suspended from a tube plate.

Furthermore, the water-chamber working apparatus 1 according to the present embodiment includes the length adjustment means 31 that changes the length of the support means 3 between the respective locking means 2.

According to the water-chamber working apparatus 1, by adjusting the length of the support means 3, the support means 3 can be spanned and stretched in the tensioned state between the respective locking means 2 regardless of the position at which the respective locking means 2 are fixed to the tube plate 137. As a result, fixation of the respective locking means 2 to the tube plate 137 can be facilitated, and the support means 3 that support the movement of the movable body 4 can be easily spanned between the respective locking means 2.

By including the length adjustment means 31, the support means 3 spanned between the respective locking means 2 can be stretched, and the respective locking means 2 can be locked to the heat transfer tube 132 due to a tensile force thereof. That is, the locking means 2 can be locked to the heat transfer tube 132 without using the clamping mechanism 21.

In the water-chamber working apparatus 1 according to the present embodiment, the locking means 2 includes the clamping mechanism 21 that is opened or closed in the radial direction, while being inserted into the heat transfer tube 132.

According to the water-chamber working apparatus 1, the locking means 2 can be easily locked to the heat transfer tube 132 or released therefrom by the clamping mechanism 21. As a result, the water-chamber working apparatus 1 can be easily installed in or removed from the water chamber 131. Accordingly, the quantity of work performed by a worker can be reduced, and the time during which the worker is exposed to radiation can be reduced.

The water-chamber working apparatus 1 according to the present embodiment includes a wire as the support means 3.

According to the water-chamber working apparatus 1, because the wire has flexibility, handling is easy by winding the wire or the like. Accordingly, the water-chamber working apparatus 1 can be easily handled.

The water-chamber working apparatus 1 according to the present embodiment includes the guide means 6 that guides the work tube 52 extending from the probe (the working device) 5 provided in the movable body 4, with the movement of the movable body 4.

According to the water-chamber working apparatus 1, the work tube 52 can be guided while reducing friction resistance associated with the work tube 52, without being loosened excessively or tightened more than necessary, with the movement of the movable body 4.

The water-chamber working apparatus 1 according to the present embodiment also includes the movable-body-position detection means 7 that detects the shortest approach position between the movable body 4 and the locking means 2.

According to the water-chamber working apparatus 1, such a state that the movable body 4 collides with the locking means 2 is prevented, thereby enabling to execute remote control of the movable body 4 easily.

The water-chamber working apparatus 1 according to the present embodiment also includes the probe (the flaw testing means) 5 that probes a flaw in the heat transfer tube 132 with respect to the heat transfer tube 132 provided in the steam generator 130, as the predetermined work.

The heat transfer tube 132 is opened to a surface facing downward of the tube plate 137, and the probe 5 needs to be inserted from the downside in order to probe a flaw in the heat transfer tube 132. Furthermore, in the water chamber 131, an inner wall surface thereof is formed in a quarter spherical shape, and fixation of the device is difficult. In this point, because the water-chamber working apparatus 1 includes at least two of the locking means 2 inserted into and locked to the heat transfer tubes 132 provided on the tube plate 137 in the water chamber 131, the support means 3 spanned between the respective locking means 2, and the movable body 4 movably provided along the spanned support means 3, the water-chamber working apparatus 1 is suitable for flaw probing of the heat transfer tube 132. As a result, at the time of performing flaw probing of the heat transfer tube 132, significant effects such that the movable body 4 is stably supported in the water chamber 131 and is easily moved can be acquired.

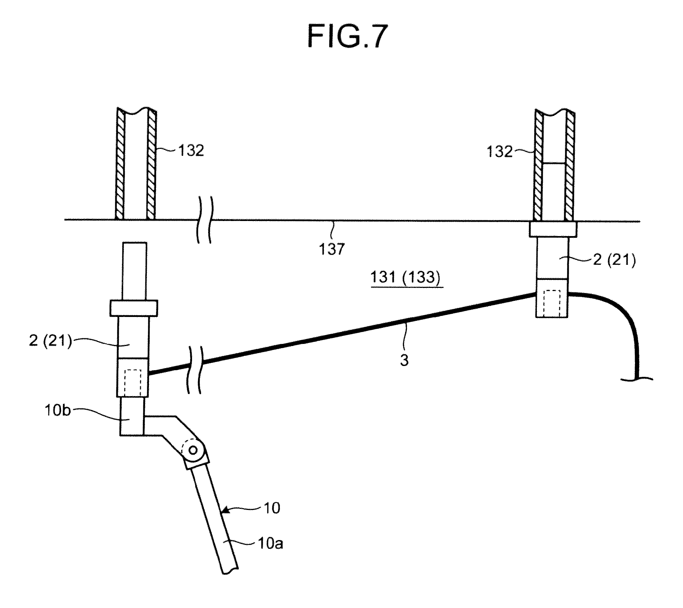

An installation method of the water-chamber working apparatus 1 according to the present embodiment is explained below. FIGS. 7 to 14 are process diagrams of the installation method of the water-chamber working apparatus according to the embodiment of the present invention.

At the time of installing the water-chamber working apparatus 1, as shown in FIG. 4, a camera 8 as an imaging unit is arranged in the water chamber 131. It is desired that the camera 8 be constituted so that an imaging position in the water chamber 131 can be changed as required or a key spot can be enlarged. The camera 8 is installed by a worker who enters into the water chamber 131 from the maintenance hatch 138. The inside of the water chamber 131 is imaged by the camera 8, and the locking means 2, the support means 3, and the movable body 4 are installed as described later, while confirming the state from outside of the water chamber 131.

As shown in FIG. 7, the locking means 2 is fixed to the tube plate 137. Fixation of the locking means 2 is performed by using the attachment jig 10. In the attachment jig 10, a holding portion 10b is provided at the end of a pole 10a, and the holding portion 10b is swingably provided with respect to the pole 10a. In a state with the locking means 2 being held by the holding portion 10b, the worker holds the pole 10a from outside of the maintenance hatch 138 and inserts the locking means 2 into the water chamber 131, thereby inserting the clamping mechanism 21 of the locking means 2 into the heat transfer tube 132 and locking the clamping mechanism 21 thereto. At the time of actuating the clamping mechanism 21 by the actuator, the actuator is actuated. At the time of actuating the clamping mechanism 21 by the attachment jig 10, the attachment jig 10 is rotated.

At least two locking means 2 are fixed to the tube plate 137, thereby spanning the support means 3 between the respective locking meons 2. Before inserting the locking means 2 into the heat transfer tubes 132 and locking the locking means 2 thereto, the length of the support means 3 between the respective locking means 2 is adjusted in advance, thereby enabling to stretch the support means 3 without generating any looseness at a time point when the locking means 2 is fixed to the tube plate 137. The length of the support means 3 between the respective locking means 2 can be adjusted after inserting the locking means 2 into the heat transfer tubes 132 and locking the locking means 2 thereto. In this case, as the length adjustment means 31 that adjusts the length of the support means 3, the motor 31a needs only to be driven in a configuration in which the support means 3 is fed by the motor 31a, or the attachment jig 10 needs only to be rotated in a configuration in which the support means 3 is fed by the attachment jig 10. Accordingly, after the locking means 2 is fixed to the tube plate 137, the support means 3 can be stretched without any looseness. As a result, the support means 3 are spanned between the two locking means 2 parallel to each other in the horizontal direction.

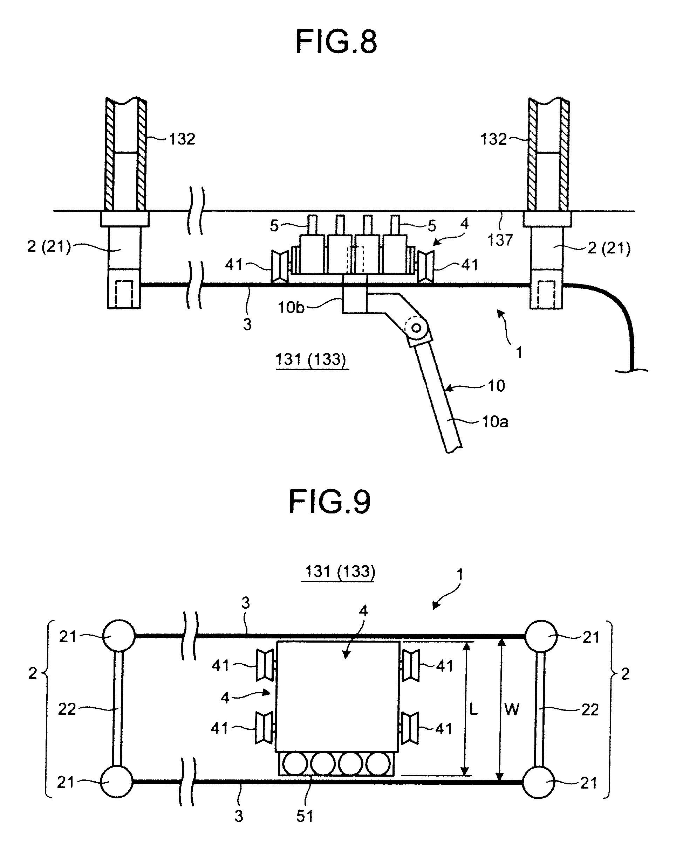

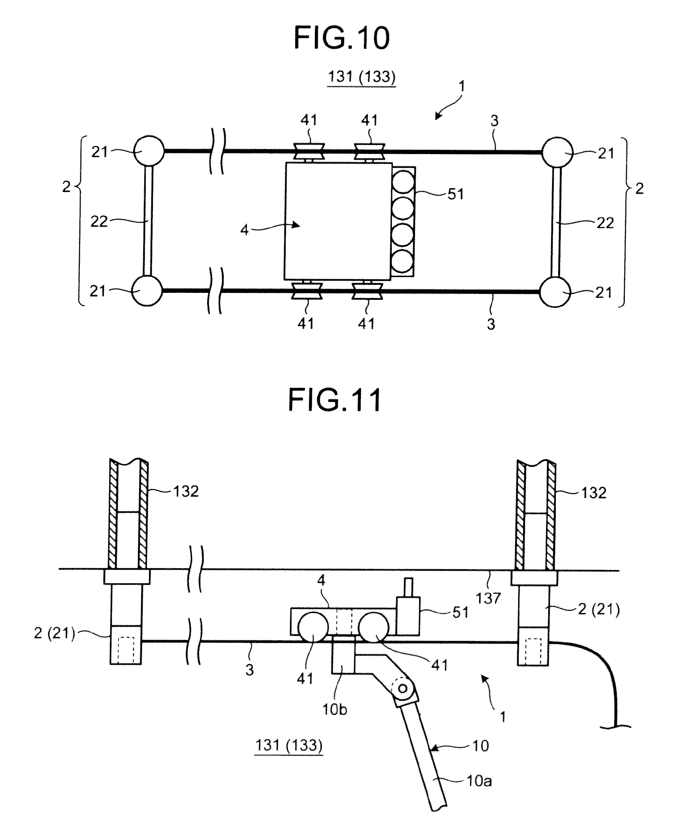

The movable body 4 is then attached to the spanned support means 3. In this process, in the present embodiment, the support means 3 are spanned between the respective locking means 2 parallel to each other in the horizontal direction. As shown in FIGS. 8 and 9, after the movable body 4 is inserted between the respective support means 3 in a state with the movable body 4 being held by the holding portion 10b of the attachment jig 10, as shown in FIGS. 10 and 11, the movable body 4 is horizontally rotated by 90 degrees by the attachment jig 10 to span the movable body 4 between the respective support means 3. That is, as shown in FIG. 9, the movable body 4 is formed such that a length L thereof in the moving direction is smaller than a gap W between the respective support means 3, so that the movable body 4 can be inserted between the respective support means 3. Therefore, when the movable body 4 is inserted between the respective support means 3 and then horizontally rotated by 90 degrees, the wheels 41 of the movable body 4 can be easily mounted on the respective support means 3.

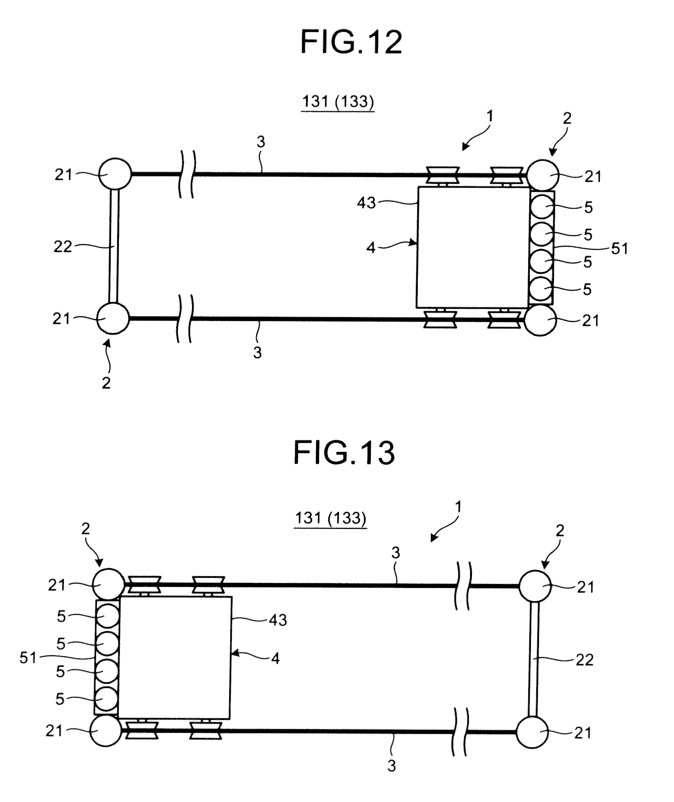

In this manner, the water-chamber working apparatus 1 is installed in the water chamber 131. The movable body 4 is moved along the support means 3 to conduct testing of the heat transfer tube 132. As described above, the probe 5 can be inserted between the respective clamping mechanisms 21 of one locking means 2. In this case, as shown in FIG. 12, after testing of the heat transfer tube 132 by each clamping mechanism 21 in one locking means 2 is conducted, the movable body 4 is horizontally rotated by 180 degrees, as shown in FIG. 13, by the attachment jig 10, thereby enabling to conduct testing of the heat transfer tube 132 on a side of the other locking means 2 in which testing cannot be conducted due to hindrance by the vehicle body 43 of the movable body 4, or testing of the heat transfer tube 132 by each clamping mechanism 21 in the other locking means 2.

After testing of all the heat transfer tubes 132 positioned in a moving range of the movable body 4 along the support means 3 is finished, the movable body 4 is detached from the support means 3 by the attachment jig 10, the position of the locking means 2 is changed by the attachment jig 10, and the movable body 4 is spanned again over to the support means 3 by the attachment jig 10, thereby conducting testing of the heat transfer tube 132 at another position.

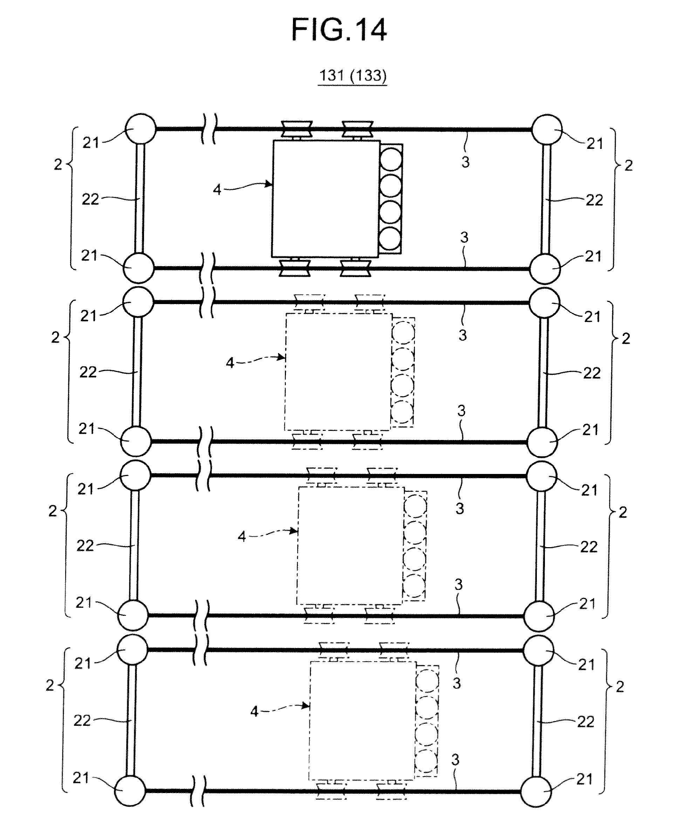

As shown in FIG. 14, a plurality of sets of at least two locking means 2 and the support means 3 spanned between these locking means 2 are prepared, and a plurality of support means 3 can be spanned with respect to the tube plates 137 to attach the movable body 4 selectively to these support means 3. That is, as described above, when testing of all the heat transfer tubes 132 positioned in the moving range of the movable body 4 along the support means 3 is finished, the movable body 4 is spanned over other support means 3 by the attachment jig 10 without changing the position of the locking means 2, thereby enabling to conduct testing of the heat transfer tubes 132 continuously. Furthermore, the support means 3 can be spanned corresponding to all the heat transfer tubes 132. However, a plurality of sets of at least two locking means 2 and the support means 3 spanned between these locking means 2 are prepared, and the support means 3 at a position where testing has finished can be moved to a position of untested heat transfer tubes 132, while conducting testing of the heat transfer tubes 132.

As described above, the installation method of the water-chamber working apparatus 1 according to the present embodiment is an installation method of the water-chamber working apparatus 1 for installing the water-chamber working apparatus 1 that performs a predetermined work inside the water chamber 131 of the steam generator 130, and includes a process of inserting at least two locking means 2 into the heat transfer tubes 132 provided on the tube plate 137 in the water chamber 131 and locking the locking means 2 thereto and spanning the support means 3 between the respective locking means 2, and a process of attaching the movable body 4 to the spanned support means 3.

According to the installation method of the water-chamber working apparatus 1, the movable body 4 moves along the support means 3 spanned between the respective locking means 2. Accordingly, the movable body 4 can be stably supported in the water chamber 131 and moved easily. That is, the installation method of the water-chamber working apparatus 1 according to the present embodiment can simplify the design for supporting the movable body 4 in the water chamber 131 and reduce working hours for remote-controlling the movable body 4, as compared to a conventional water-chamber working apparatus in which a movable body is suspended from a tube plate. According to the installation method of the water-chamber working apparatus 1, all the configurations for moving and working do not need to be provided in the movable body 4, and the weight is distributed, thereby enabling to perform the installation work easily, as compared to the conventional water-chamber working apparatus in which the movable body is suspended from the tube plate.

The installation method of the water-chamber working apparatus 1 according to the present embodiment includes a process of adjusting in advance the length of the support means 3 before the locking means 2 is inserted into and locked to the heat transfer tubes 132.

According to the installation method of the water-chamber working apparatus 1, the length of the support means 3 is adjusted outside of the water chamber 131 before fixing the locking means 2 in the water chamber 131, thereby enabling to reduce the time during which the worker is exposed to radiation, and to provide a safe work.

The installation method of the water-chamber working apparatus 1 according to the present embodiment also includes a process of adjusting the length of the support means 3 after the locking means 2 is inserted into and locked to the heat transfer tubes 132.

According to the installation method of the water-chamber working apparatus 1, when the locking means 2 is attached to the tube plate 137, the support means 3 can be loosened, and after the locking means 2 is attached, the support means 3 between the respective locking means 2 can be stretched in a tensioned state, thereby enabling to perform an attachment work of the locking means 2 easily and to stretch the support means 3 in the tensioned state appropriately.

In the installation method of the water-chamber working apparatus 1 according to the present embodiment, after the support means 3 are spanned parallel to each other in the horizontal direction and the movable body 4 is inserted between the respective support means 3, the movable body 4 is horizontally rotated by 90 degrees to span the movable body 4 between the respective support means 3.

The movable body 4 can be moved stably by spanning the movable body 4 between the support means 3 parallel to each other in the horizontal direction. According to the installation method of the water-chamber working apparatus 1, the work for spanning the movable body 4 between the support means 3 parallel to each other in the horizontal direction can be easily performed.

In the installation method of the water-chamber working apparatus 1 according to the present embodiment, a plurality of support means 3 are spanned, and the movable body 4 is selectively attached to the support means 3.

According to the installation method of the water-chamber working apparatus 1, after testing of all the heat transfer tubes 132 positioned in the moving range of the movable body 4 along the support means 3 is finished, the movable body 4 is spanned between other support means 3 without changing the position of the locking means 2, thereby enabling to conduct testing of the heat transfer tubes 132 continuously.

In the installation method of the water-chamber working apparatus 1 according to the present embodiment, the camera (imaging unit) 8 is arranged in the water chamber 131 in advance, and the locking means 2, the support means 3, and the movable body 4 are installed while images inside the water chamber 131 are captured by the camera 8.

According to the installation method of the water-chamber working apparatus 1, because the installed condition of the locking means 2, the support means 3, and the movable body 4 can be confirmed from outside of the water chamber 131, the time during which the worker is exposed to radiation can be reduced, and a safe work can be provided. Furthermore, the position of the movable body 4 for relating the probe (the working device) 5 to a predetermined heat transfer tube 132 can be appropriately ascertained by capturing images inside the water chamber 131 by the camera 8. The camera 8 can be provided in the movable body 4.

### Reference Signs List

- 1: WATER-CHAMBER WORKING APPARATUS
- 2: LOCKING MEANS
- 21: CLAIVIPING MECHANISM
- 22: COUPLING MEMBER
- 3: SUPPORT MEANS
- 31: LENGTH ADJUSTMENT MEANS
- 31a: MOTOR
- 31b: ROLLER
- 4: MOVABLE BODY
- 41: WHEEL
- 42: ROGATION SHAFT
- 43: VEHICLE BODY
- 44: DRIVE MOTOR
- 5: PROBE (WORKING DEVICE)
- 51: PROBE SUPPORT BODY
- 52: WORK TUBE
- 6: GUIDE MEANS
- 7: MOVABLE-BODY-POSITION DETECTION MEANS
- 71: SWITCH
- 72: ACTUATION UNIT
- 8: CAMERA (IMAGING UNIT)
- 10: ATTACHMENT JIG
- 10a: POLE
- 10b: HOLDING PORTION
- 100: NUCLEAR POWER PLANT
- 110: REACTOR VESSEL
- 120: PRESSURIZER
- 130: STEAM GENERATOR
- 131, 133: WATER CHAMBER
- 132: HEAT TRANSFER TUBE
- 137: TUBE PLATE
- 138: MAINTENANCE HATCH

## Claims

1. A water-chamber working apparatus that performs a predetermined work inside a water chamber of a steam generator, the water-chamber working apparatus comprising:
at least two locking units inserted into and locked to heat transfer tubes provided on a tube plate in the water chamber;
a support unit spanned between the respective locking units; and
a movable body movably provided along the spanned support unit.

2. The water-chamber working apparatus according to claim 1, further comprising a length adjustment unit that can change a length of the support unit between the respective locking units.

3. The water-chamber working apparatus according to claim 1 or 2, wherein the locking unit includes a clamping mechanism that is opened or closed in a radially outward direction, while being inserted into the heat transfer tube.

4. The water-chamber working apparatus according to any one of claims 1 to 3, wherein the support unit is a wire.

5. The water-chamber working apparatus according to any one of claims 1 to 4, further comprising a guide unit that guides a work tube extending from a working device provided, in the movable body along with a movement of the movable body.

6. The water-chamber working apparatus according to any one of claims 1 to 5, further comprising a movable-body position detection unit that detects a shortest approach position between the movable body and the locking unit.

7. The water-chamber working apparatus according to any one of claims 1 to 6, wherein the movable body includes a flaw testing unit that probes, as a predetermined work, a flaw formed on the heat transfer tubes with respect to the heat transfer tubes provided in the steam generator.

8. An installation method of a water-chamber working apparatus for installing a water-chamber working apparatus that performs a predetermined work inside a water chamber of a steam generator, the installation method comprising:
a step of inserting at least two locking units into heat transfer tubes provided on a tube plate in the water chamber and locking the locking units thereto, and spanning a support unit between the respective locking units; and
a step of attaching the movable body to the spanned support unit.

9. The installation method of a water-chamber working apparatus according to claim 8, further comprising a step of adjusting in advance a length of the support unit before the locking unit is inserted into and locked to the heat transfer tubes.

10. The installation method of a water-chamber working apparatus according to claim 8, further comprising a step of adjusting a length of the support unit after the locking unit is inserted into and locked to the heat transfer tubes.

11. The installation method of a water-chamber working apparatus according to any one of claims 8 to 10, wherein the support units are spanned parallel to each other in a horizontal direction, and after the movable body is inserted between the respective support units, the movable body is horizontally rotated by 90 degrees to span the movable body between the respective support units.

12. The installation method of a water-chamber working apparatus according to any one of claims 8 to 10, wherein a plurality of support units are spanned and the movable body is selectively attached to one of the support units.

13. The installation method of a water-chamber working apparatus according to any one of claims 8 to 12, wherein an imaging unit is arranged in advance in the water chamber, and the locking unit, the support unit, and the movable body are installed, while capturing images inside the water chamber by the imaging unit.
